(19) Europäisches Patentamt
European Patent Office
Office européen des brevets

(11) **EP 1 533 797 A1**

(12) **EUROPEAN PATENT APPLICATION**
published in accordance with Art. 158(3) EPC

(43) Date of publication:
**25.05.2005 Bulletin 2005/21**

(51) Int Cl.7: **G11B 7/007**, G11B 7/24

(21) Application number: **03795223.1**

(22) Date of filing: **14.08.2003**

(86) International application number:
**PCT/JP2003/010336**

(87) International publication number:
**WO 2004/025631 (25.03.2004 Gazette 2004/13)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **26.08.2002 JP 2002245481**
**26.08.2002 JP 2002245497**
**03.10.2002 JP 2002290975**
**10.04.2003 JP 2003106113**

(71) Applicant: **Taiyo Yuden Co., Ltd.**
**Tokyo 110-0005 (JP)**

(72) Inventors:
- **MATSUDA, Isao, c/o Taiyo Yuden Co., Ltd.**
  **Taito-ku, Tokyo 110-0005 (JP)**
- **HARA, Fumi, c/o Taiyo Yuden Co., Ltd.**
  **Taito-ku, Tokyo 110-0005 (JP)**
- **HORIKOSHI, Soichi, c/o Taiyo Yuden Co., Ltd.**
  **Taito-ku, Tokyo 110-0005 (JP)**

(74) Representative: **Grünecker, Kinkeldey, Stockmair & Schwanhäusser Anwaltssozietät**
**Maximilianstrasse 58**
**80538 München (DE)**

(54) **OPTICAL INFORMATION RECORDING MEDIUM**

(57) It is an object to provide optical information recording media enabling the recording at high speeds and high densities, such as onto DVD-R discs or similar, of optical information, optimizing the shape of meandering land pre-pits 21, increasing clearness of diffraction of laser light 9 by the land pre-pits 21 to obtain a satisfactory land pre-pit signal, and simultaneously reducing RF readout errors for recorded pits and readout errors for land pre-pits 21, focusing on optimization of the size of the inside protruding portion 23 and outside protruding portion 25 relative to the spot 9S of the laser light 9 with respect to the shape and size of the land pre-pits 21, and when e is the base of natural logarithms, the media is **characterized in that** the inside edge portions 22 of the inside protruding portion 23 and the outside edge portions 24 of the outside protruding portion 25 of the land pre-pits 21 are positioned within the range of the spot diameter E2 in the $1/e^2$ portion of the Gaussian energy distribution of the spot 9S of laser light 9. Further, with respect to the distance $L_{in}$ between the two inside edge portions 22 of the inside protruding portion 23 of the land pre-pits 21, the distance $L_{out}$ between the two outside edge portions 24 of the outside protruding portion 25 of the land pre-pits 21, and the basic length T expressing the lengths of recorded pits, the media is further **characterized in that** the distances $L_{in}$ and $L_{out}$ are in the range 3T to 6T; that $0.40 \, \mu m \leq L_{in} \leq 0.80 \, \mu m$ and $0.40 \, \mu m \leq L_{out} \leq 0.80 \, \mu m$; and that, when the inside protruding length in the radial direction on the inside of the arc shape of land pre-pits 8 is $R_{in}$ and the outside protruding length is $R_{out}$, $0.120 \, \mu m \leq R_{in} \leq 0.182 \, \mu m$ and $0.100 \, \mu m \leq R_{out} \leq 0.250 \, \mu m$.

Fig. 1

**Description**

TECHNICAL FIELD

This invention relates to optical information recording media, and in particular to optical information recording media having an optical recording layer, comprising at least light absorbing material or similar, and a metal film or other light reflecting layer on a translucent substrate, and which is capable of recording and reproduction at high density and at high speed, using for example short-wavelength red laser light of wavelength 630 to 670 nm or blue laser light of wavelength 400 to 410 nm.

BACKGROUND ART

The specifications adopted for DVD-R (Digital Versatile (or Video) Disc Writable) discs, capable of optical recording of information at higher densities than the recordable CD-R (Compact Disc Writable) discs which have in the past been widely adopted as optical information recording media, are different from the specifications for CD-R discs.

Differences include, for example, the fact that the optical pickup uses short-wavelength red laser light of wavelength 630 to 670 nm and an objective lens with a high numerical aperture (NA) of 0.6 to 0.65.

In the prior art, in recordable CD-R discs the spiral-shape pregroove, used as a tracking guide, is made to "wobble", this wobble is frequency-modulated, and position information called ATIP (Absolute Time In Pregroove) and other address information is obtained.

On the other hand, in a DVD-R disc, in place of the above ATIP, together with formation of the "wobble", land pre-pits are formed in lands between the pregroove; by this means address information and other sector information on the optical information recording media is obtained.

When data bits (recording bits) are recorded in optical information recording media in which such land pre-pits are formed and are then reproduced, the above-described optical pickup reads both the data pits and the land pre-pits, and there is the problem that, depending on the relative positional relationship between the data pits and land pre-pits, errors may occur in read signals and reproduction may become unstable.

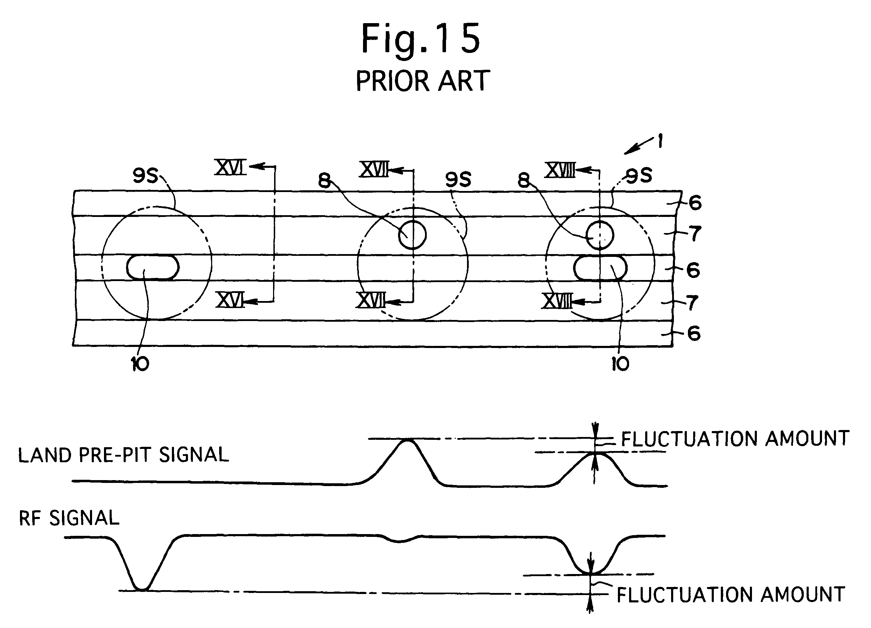

Conventional optical information recording media with land pre-pits is explained below, based on Fig. 15 through Fig. 24.

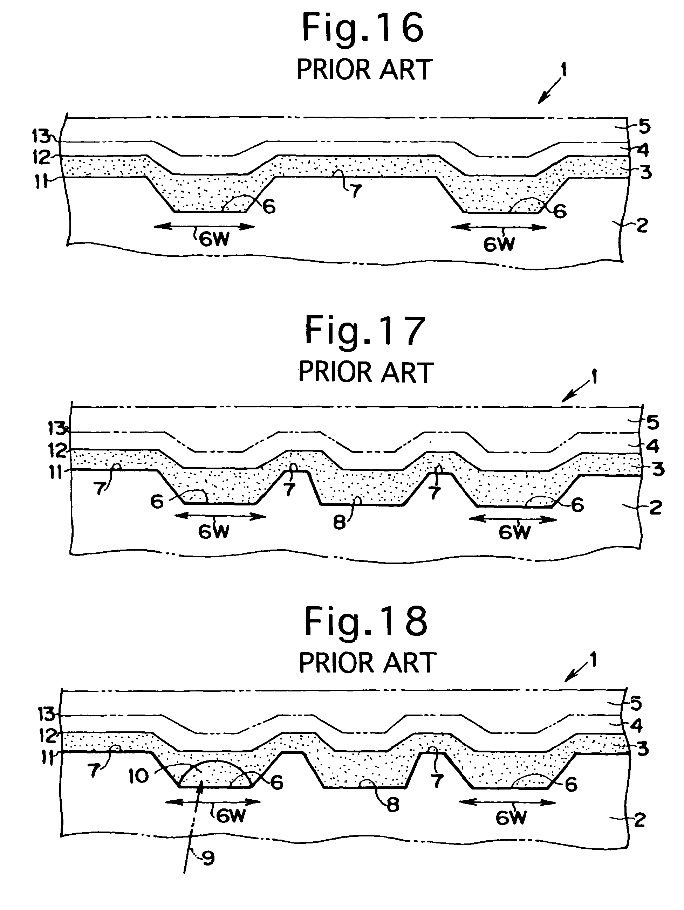

Fig. 15 is an enlarged plane view of principal portions of conventional optical information recording media 1 and a graph of the RF signals and land pre-pit signals thereof; Fig. 16 is a cross-sectional view along line XVI-XVI in Fig. 15; Fig. 17 is a cross-sectional view along line XVII-XVII in Fig. 15; and Fig. 18 is a cross-sectional view along line XVIII-XVIII in Fig. 15.

The optical information recording media 1 has a translucent substrate 2, a light absorbing layer 3 (optical recording layer) formed on the substrate 2, a light reflecting layer 4 formed on the light absorbing layer 3, and a protective layer 5 formed on the light reflecting layer 4.

A spiral-shape pregroove 6 is formed in the above substrate 2. On the left and right of this pregroove are positioned portions other than the pregroove 6, that is, lands 7. Land pre-pits 8 are formed at a prescribed period in the lands 7, and address information and other sector information is recorded.

As shown in Fig. 18, when the optical information recording media 1 is irradiated with laser light 9 (recording light, forming the circular spot 9S in Fig. 15), the light absorbing layer 3 absorbs the energy of this laser light 9 and so is heated, and thermal transformation occurs on the side of the substrate 2 to form the recorded pit 10.

Fig. 15 mainly depicts the pregrooves 6, lands 7, land pre-pits 8, and recorded pit 10, omitting the light reflecting layer 5 and protective layer 5 of the optical information recording media 1.

Further, by forming undulations ("wobbles", 6W) in the pregroove 6 along the circumferential direction of the optical information recording media, as shown in Fig. 15, Fig. 16, Fig. 17 and Fig. 18, rotation of the optical information recording media can be synchronized with information recording and readout, and tracking action can be secured during recording.

The substrate 2 and light absorbing layer 3 are in contact at the first layer interface 11.

The light absorbing layer 3 and light reflecting layer 4 are in contact at the second layer interface 12.

The light reflecting layer 4 and protective layer 5 are in contact at the third layer interface 13.

The translucent substrate 2 is formed primarily from a resin with excellent shock resistance, and which is a material with high transparency and with refractive index for laser light in the range of, for example, 1.4 to 1.6 approximately; for example, polycarbonate, glass plate, acrylic plate, epoxy plate, or similar may be used.

The light absorbing layer 3 is a layer comprising light absorbing material (light-absorption material) formed on the substrate 2; upon irradiation with laser light 9, this layer undergoes heating, fusion, sublimation, deformation, or degeneration. This light absorbing layer 3 uniformly coating the surface of the substrate 2 with a cyanine dye or similar, dissolved in a solvent, using spin-coating or other means.

As the material used in the light absorbing layer 3, an arbitrary optical recording material can be adopted, but an optically absorptive organic dye is preferable.

The light reflecting layer 4 is a metal film, formed by evaporation deposition, sputtering or similar means from for example gold, silver, copper, aluminum, or an alloy comprising any of these.

The protective layer 5 is formed from a resin having excellent shock resistance, similar to the substrate 2. For example, an ultraviolet-curing resin may be applied by a spin-coating method and then cured by irradiation with ultraviolet rays to form the layer.

As indicated by the graph in Fig. 15, upon irradiation with laser light 9 as reproduction light, the RF signal (on the left side in the figure) of a recorded pit 10 not adjacent to a land pre-pit 8 is obtained at an appropriate level. Also, a land pre-pit signal (in the center of the figure) for a land pre-pit 8 not adjacent to a recorded pit 10 can also be obtained at an appropriate level.

However, when a land pre-pit 8 and recorded pit 10 are mutually adjacent in the radial direction of the optical information recording media 1 in particular, there is the problem that the level of the land pre-pit signal and the level of the RF signal both either fall or rise (right side in Fig. 15).

Specifically, in the case of a land pre-pit signal, the signal amplitude decreases, and the AR (Aperture Ratio, an index of the rate of decrease in amplitude) declines. The AR is the ratio (as a percentage) of the land pre-pit signal in a portion in which there is a maximum-length recorded pit 10 to the land pre-pit signal in a portion with no recorded pit 10; the DVD-R standard requires that the AR be 15% or higher.

Fluctuations in the RF signal may lead to RF readout errors; the DVD-R standard requires, as a criterion for fluctuation of RF signals, that RF readout errors be fewer than 250.

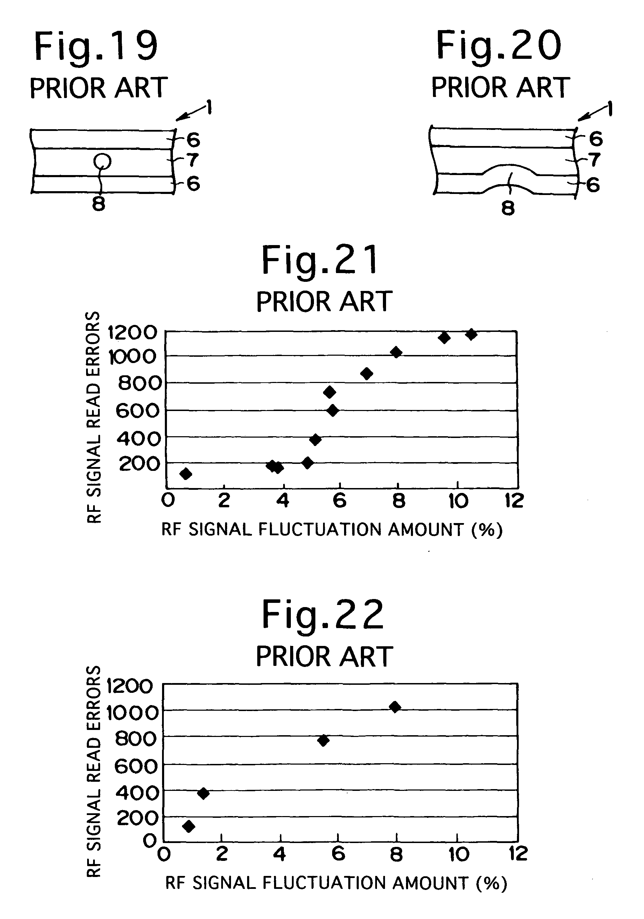

The above-described problems occur both when the land pre-pits shown in Fig. 19 are of circular shape, and when the land pre-pits 8 are meandering, as shown in Fig. 20.

Fig. 21 is a graph showing RF readout errors in relation to the amount of fluctuation in the RF signal in the case of circular land pre-pits 8. Fig. 22 is a graph showing RF readout errors in relation to the amount of fluctuation in the RF signal in the case of meandering land pre-pits 8.

As indicated in the figures, compared with circular land pre-pits 8, meandering land pre-pits 8 have a narrower margin with respect to the amount of RF signal fluctuation resulting in an error, and the optimal design range for such pre-pits must be set strictly with respect to various optical pickup types and spot dimensions, as well as angular fluctuations, focal fluctuations, tracking fluctuations, and other disturbances which readily occur at high speeds in particular.

Also, there is the further problem, regarding meandering land pre-pits 8, that the extent or protrusion length on the inside and outside of the arc portion of the meandering shape, or the distance between arc end portions, cannot easily be set in an appropriate combination for the inside and for the outside.

The amount of RF signal fluctuation is the amount of fluctuation in the level (when there is a land pre-pit 8 adjacent to the recorded pit 10) relative to the level when there is no fluctuation (when there is no land pre-pit 8 adjacent to the recorded pit 10), in percent; in order for there to be fewer than 250 RF readout errors, according to Fig. 22, the RF signal fluctuation amount for meandering land pre-pits 8 must be at least 1% (1% as an absolute value) or lower.

As described above, optimized design conditions to lower the readout errors of land pre-pits 8 while simultaneously lowering RF readout errors are required for meandering land pre-pits 8 in particular, and it is necessary to stabilize the RF signal fluctuation amount at less than 1% while maintaining the AR (amplitude decrease rate index) of land pre-pits 8 at 15% or higher.

On the other hand, particularly in the case of optical information recording media 1 on which circular land pre-pits 8 are formed, there is the problem that the RF signal fluctuates with the optical depth in the light absorbing layer 3, and the extent of fluctuation is comparatively large.

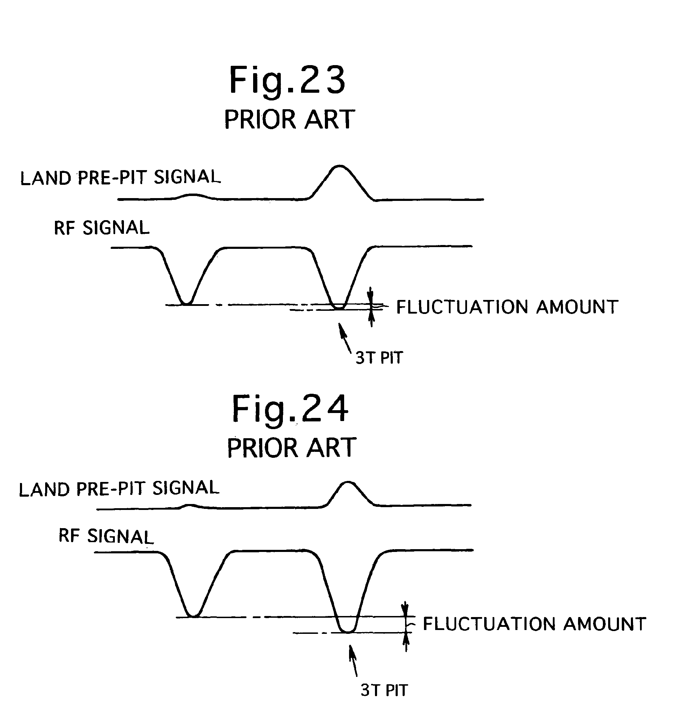

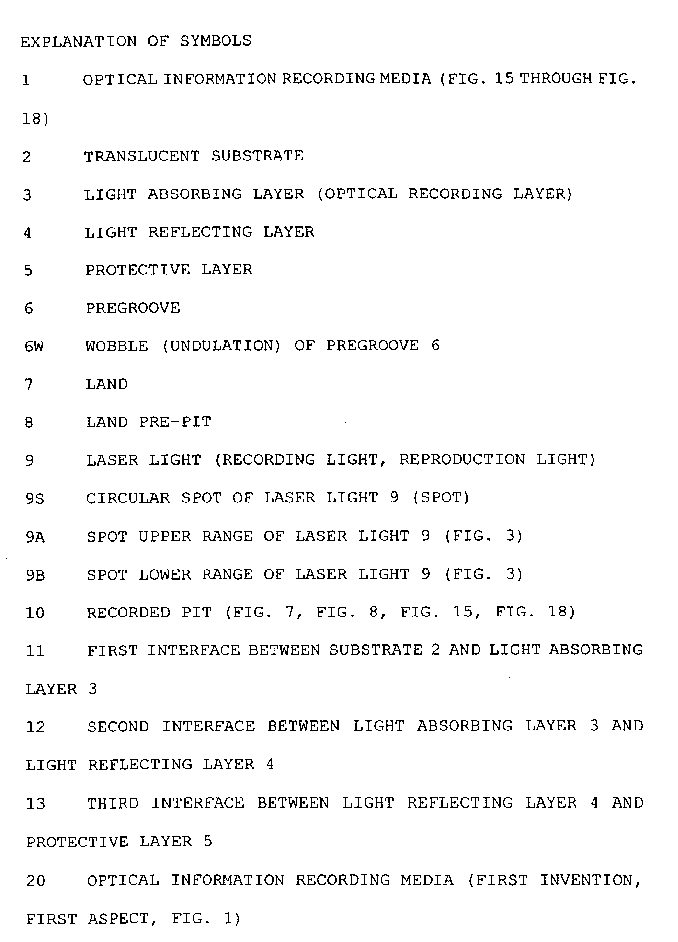

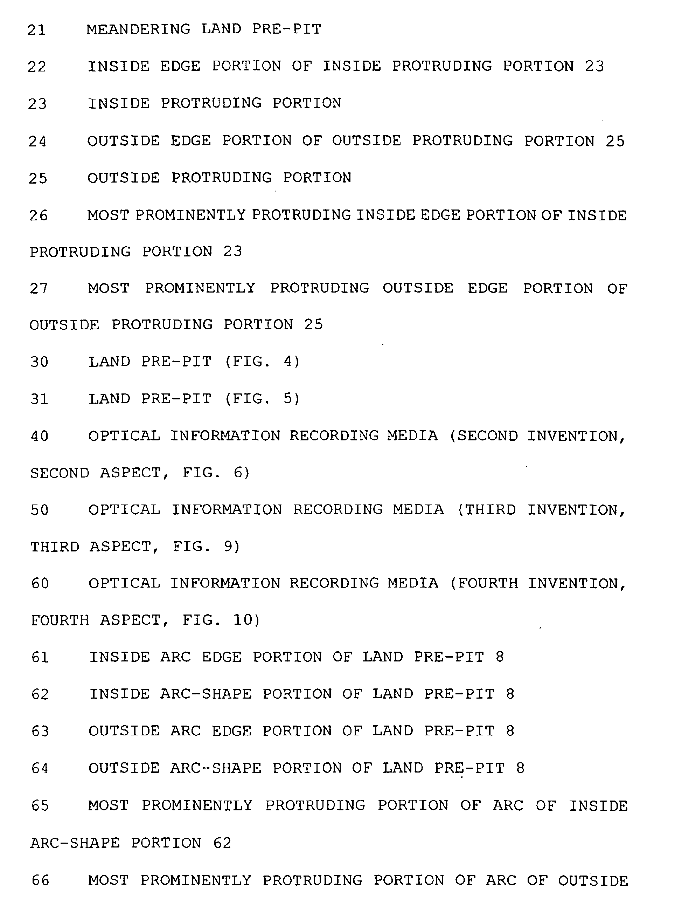

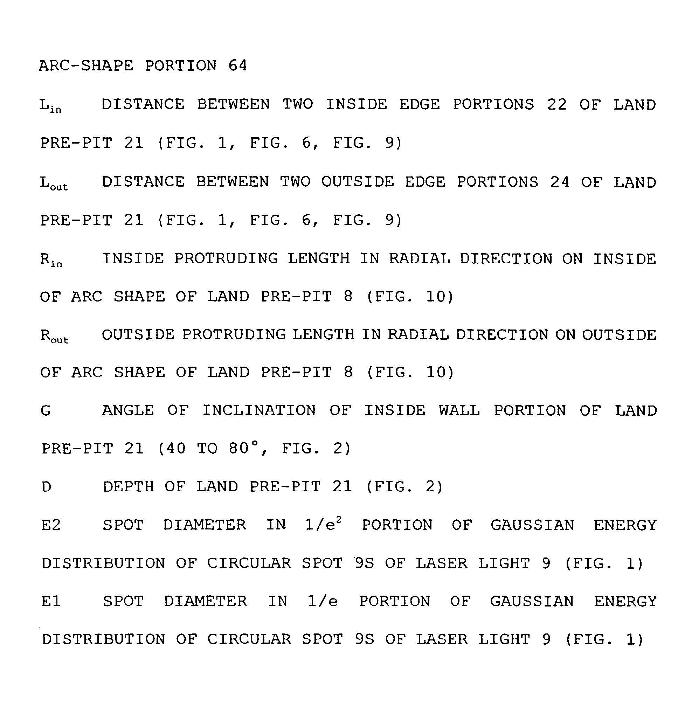

Fig. 23 is a graph of RF signals and land pre-pit signals for optical information recording media similar to that of Fig. 15, and is a graph of RF signals for which the unrecorded optical depth is approximately $\lambda/5.8$ (in particular, signals for 3T pits which are the shortest recorded pits 10, where T is the basic length representing the length of recorded pits; T=0.134 $\mu$m) and of land pre-pit signals.

Fig. 24 is a graph of RF signals for which the unrecorded optical depth is approximately $\lambda/6.2$ (similarly, 3T pit signals) and of land pre-pit signals in the same media. Here $\lambda$ is the wavelength of the laser light 9.

As shown in Fig. 23, when the unrecorded optical depth is approximately $\lambda/5.8$, there is almost no effect of the land pre-pit signal on the RF signal compared with the graph on the left side in the figure in which the recorded pit 10 is isolated, as is clear from the right side of the figure in which the recorded pit 10 is adjacent to a land pre-pit 8, and there is only slight fluctuation of the RF signal.

However, when as in Fig. 24 the unrecorded optical depth is approximately $\lambda/6.2$, when a recorded pit 10 and a land pre-pit 8 are adjacent, the RF signal is affected by the land pre-pit signal, and there is the problem that fluctuation of the signal amplitude of the RF signal increases.

The unrecorded optical depth can be calculated from the depth of the pregroove 6, the thickness of the dye on the land 7, the thickness of the dye in the pregroove 6, the refractive index n of the dye and substrate 2, and other parameters; but from the graphs of Fig. 23 and Fig. 24, when land pre-pits 8 are circular the extent of fluctuation in the RF signal is seen to depend heavily on the depth of the pregroove 6 and on the thickness of the dye in the deposited film state.

On the other hand, according to a discovery by the inventors, a meandering land pre-pit 8 is not so greatly influenced by differences in the unrecorded optical depth compared with circular land pre-pits 8, and depending on the deposited film state, optimization is possible without greatly affecting the RF signal.

Further, when meandering land pre-pits 8 are adopted, if the laser light 9 is shifted from the center direction (detracked) of the optical information recording media 1 (disc) due to some external disturbance, because meandering land pre-pits 8 generally protrude in an arc shape in the outward radial direction of the disc, when a land pre-pit 8 and recorded pit 10 overlap a portion of the land pre-pit 8 encroaches into the recorded pit 10 and affects the shape and size of the recorded pit, so that there is the problem that the recorded pit 10 cannot attain the necessary size and a satisfactory RF signal cannot easily be obtained.

Land pre-pits and pre-pits are described in Japanese Patent Laid-open No. 9-17029, Japanese Patent Laid-open No. 9-326138, and Japanese Patent Laid-open No. 2000-40261 and elsewhere.

DISCLOSURE OF THE INVENTION

This invention was devised in light of the above problems, and has as an object the provision of optical information recording media, and in particular DVD-R discs, enabling recording of optical information at high densities.

A further object of this invention is the provision of optical information recording media in which the shape of meandering land pre-pits is optimized, and address information and other sector information on the optical information recording media can be obtained satisfactorily.

A further object of this invention is the provision of optical information recording media with optimal design conditions set to reduce land pre-pit readout errors, while simultaneously reducing the RF readout errors of recorded pits.

A further object of this invention is the provision of optical information recording media enabling the stabilization of RF signal fluctuation amounts up to approximately 1% with respect to meandering land pre-pits in particular, while maintaining a land pre-pit AR (amplitude decrease rate index) of 15% or higher.

A further object of this invention is the provision of optical information recording media enabling the stabilization of RF signal fluctuation amounts up to approximately 1% even in cases of recording at high speeds of for example four or more times the conventional linear speed (3.5 m/sec), while maintaining a land pre-pit AR (amplitude decrease rate index) of 15% or higher.

A further object of this invention is the provision of optical information recording media in which, by designing the shape and/or the size of land pre-pits in an optimal relative positional relationship with the energy distribution of the laser light spot, enables acquisition of the land pre-pit signal.

A further object of this invention is the provision of optical information recording media which can further clarify diffraction of laser light at land pre-pit portions, enabling the acquisition of satisfactory land pre-pit signals.

A further object of this invention is the provision of optical information recording media enabling optimization of land pre-pit signals, without being greatly influenced by differences in the unrecorded optical depth, and without the state of the deposited film greatly influencing the RF signal.

A further object of this invention is the provision of optical information recording media in which, by designing the shape and/or the size of land pre-pits in relation to the optimal relative size of recorded pits written by laser light, the signals of the recorded pits and land pre-pits can both be obtained satisfactorily.

A further object of this invention is the provision of optical information recording media enabling acquisition of the required RF signal, with minimal influence on recorded pits, even when there is shifting from the center direction (detracking) of laser light on the optical information recording media (disc).

A further object of this invention is the provision of optical information recording media in which, through choice of an appropriate length for land pre-pits in the scanning direction, land pre-pit signals can be obtained.

That is, this invention (the first invention) is optical information recording media which, focusing on optimization of the shape and/or the size of meandering land pre-pits, the inside protruding portion and outside protruding portion, and the size relative to the laser light spot, has a translucent substrate on which are formed a pregroove and land pre-pits in the lands on either side of the pregroove, an optical recording layer provided on this substrate and enabling recording by recording light, and a light reflecting layer provided on this optical recording layer and which reflects the above recording light, and which enables recording, by irradiation with the above recording light of the above optical recording layer through the above substrate, of information which can be read optically; the optical information recording media is characterized in that the above land pre-pits are continuous along the above pregroove and protrude in the radial direction of the above substrate, and that, if e is the base of natural logarithms, then the inside edge portion of the inside protruding portion and the outside edge portion of the outside protruding portion of the above land pre-pits are positioned within the range of the diameter of the spot of the above recording light in the $1/e^2$ portion of the Gaussian energy distribution of the spot.

The above inside edge portion and the above outside edge portion of the above land pre-pits can be positioned so as to converge toward the center position of the above spot due to the above recording light. Hence the shape of meandering land pre-pits can itself be substantially a triangular shape.

If the distance between the above two inside edge portions of the above inside protruding portions of the above land pre-pits is $L_{in}$, and the distance between the above two outside edge portions of the above outside protruding portions is $L_{out}$, then these distances $L_{in}$ and $L_{out}$ can be made smaller than the above spot diameter within the range of the diameter of the spot of the above recording light in the $1/e^2$ portion of the Gaussian energy distribution of the spot.

Together with the above inside edge portion and outside edge portion of the above land pre-pits, the inside maximum protrusion portion of the above inside protruding portion, and the outside maximum protrusion portion of the above outside protruding portion, can be positioned within the range of the above spot diameter of the above recording light in the $1/e^2$ portion of the Gaussian energy distribution of the spot.

The above inside edge portion and the above outside edge portion can be positioned within the range of the diameter of the spot of the above recording light in the 1/e portion of the Gaussian energy distribution of the spot.

As a result of positioning such that the entirety of the above land pre-pits converge toward the center position of the above spot, the shape of meandering land pre-pits, which generally protrude in an arc shape, can itself be substantially a triangular shape. Of course, the above land pre-pits can be made in a triangular shape, an arc shape, a trapezoidal shape, or another arbitrary shape.

In optical information recording media of this invention (the first invention), when e is the base of natural logarithms (approximately 2.72), the inside edge portion of the inside protruding portion and the outside edge portion of the outside protruding portion of land pre-pits are positioned to be within the range of the diameter of the spot of the above recording light in the $1/e^2$ portion of the Gaussian energy distribution of the spot, so that the diffraction state of laser light irradiating a land pre-pit is satisfactory on the land pre-pit inside and outside and the land pre-pit signal can be more clearly acquired by the laser light, and even when a recorded pit exists near a land pre-pit the effect on the RF signal can be reduced.

Further, land pre-pit signals can be optimized without being greatly affected by differences in unrecorded optical depths, and depending on the deposited film state, without greatly affecting the RF signal.

In this way, RF fluctuations can be stabilized at approximately 1% during reproduction and the AR of land pre-pits can be maintained at 15% or higher, so that readout errors for RF signals and land pre-pits can be avoided, and necessary sector information can be reliably obtained even from DVD-R discs at high densities and high speeds.

Next, this invention (the second invention) is optical information recording media which, focusing on optimization of the shape and/or the size of meandering land pre-pits, the inside protruding portion and outside protruding portion, and the size relative to recorded pits, has a translucent substrate on which are formed a pregroove and land pre-pits in the lands on either side of the pregroove, an optical recording layer provided on this substrate and enabling recording of recorded pits by recording light, and a light reflecting layer provided on this optical recording layer and which reflects the above recording light, and which enables recording, by irradiation with the above recording light of the above optical recording layer through the above substrate, of information which can be read optically; the optical information recording media is characterized in that the above land pre-pits are continuous along the above pregroove and protrude in the radial direction of the above substrate, and that, if $L_{in}$ is the distance between the two inside edge portions of inside protruding portions of the above land pre-pits, $L_{out}$ is the distance between the two outside edge portions of outside protruding portions of the above land pre-pits, and T is the basic length representing the length of the above recorded pits, then the distances $L_{in}$ and $L_{out}$ are in the range 3T to 6T.

The above distances $L_{in}$ and $L_{out}$ can be limited to the range 3.36T to 5.22T.

The above distance $L_{in}$ can be limited to the range 3T to 4T.

The above distance $L_{in}$ can be limited to the range 3.36T to 3.73T.

The above distance $L_{out}$ can be limited to the range 4T to 6T.

The above distance $L_{out}$ can be limited to the range 4.85T to 5.22T.

The above land pre-pits can be formed in triangular shapes, arc shapes, trapezoidal shapes, or other arbitrary shapes.

In an optical information recording media of this invention (the second invention), the distance between the two inside edge portions of inside protruding portions of land pre-pits $L_{in}$ and the distance between the two outside edge portions of outside protruding portions of land pre-pits $L_{out}$ are set in the range 3T to 6T, so that even in states in which recorded pits having ten different lengths 3T, 4T, ..., 10T, 11T, 14T overlap with land pre-pits, the RF signal can be obtained satisfactorily without exerting a critical influence on the shape and/or size of recorded pits, and readout errors for land pre-pit signals can also be reduced.

Next, this invention (the third invention) is optical information recording media which, focusing on appropriate ranges for the distance $L_{in}$ between the two inside edge portions of inside protruding portions of land pre-pits and for the distance $L_{out}$ between the two outside edge portions of outside protruding portions of land pre-pits, has a translucent substrate on which are formed a pregroove and land pre-pits in the lands on either side of the pregroove, an optical recording layer provided on this substrate and enabling recording of recorded pits by recording light, and a light reflecting layer provided on this optical recording layer and which reflects the above recording light, and which enables recording, by irradiation with the above recording light of the above optical recording layer through the above substrate, of information which can be read optically; the optical information recording media is characterized in that, when the distance between the two inside edge portions of the above land pre-pits is $L_{in}$ and the distance between the two outside edge portions of the above land pre-pits is $L_{out}$, these values are set such that 0.40 μm $\leq L_{in} \leq$ 0.80 μm and 0.40 μm $\leq L_{out} \leq$ 0.80 μm.

The above distances $L_{in}$ and $L_{out}$ can be set such that 0.45 μm $\leq L_{in} \leq$ 0.50 μm and 0.65 μm $\leq L_{out} \leq$ 0.70 μm.

The above land pre-pits can be formed in a meandering shape.

With respect to the above land pre-pits, it is sufficient that the distances $L_{in}$ and $L_{out}$ be in the above range, and so in general the shape of meander-shape or meandering land pre-pits which protrude in an arc shape may be a shape which is substantially triangular. Of course the above land pre-pits may be in a triangular shape, an arc shape, a trapezoidal shape, or another arbitrary shape.

In optical information recording media of this invention (the third invention), the conditions for the distances $L_{in}$ and $L_{out}$ of 0.40 μm $\leq L_{in} \leq$ 0.80 μm and 0.40 μm $\leq L_{out} \leq$ 0.80 μm are set, so that the diffraction state of laser light incident on land pre-pits is satisfactory on the land pre-pit outside and inside, a clear land pre-pit signal can be obtained using this laser light, and even when a recorded pit exists near the land pre-pit, the effect on the RF signal can be reduced.

Further, the land pre-pit signal can be optimized without being greatly influenced by differences in unrecorded optical depth, and depending on the deposited film state, without greatly affecting the RF signal.

In this way, the RF fluctuation amount during reproduction can be stabilized at approximately 1%, the land pre-pit AR can be maintained at 15% or higher, readout errors for RF signals and land pre-pits can be avoided, and necessary sector information can be reliably obtained even from DVD-R discs at high densities and high speeds.

Next, this invention (the fourth invention) is optical information recording media which, focusing on the arc shape of meandering land pre-pits, the disc radial-direction inside protruding length on the inside of the arc and the radial-direction outside protruding length on the outside of the arc, has a translucent substrate on which are formed a pregroove and land pre-pits in the lands on either side of the pregroove, an optical recording layer provided on this substrate and enabling recording by recording light, and a light reflecting layer provided on this optical recording layer and which reflects the above recording light, and which enables recording, by irradiation with the above recording light of the above optical recording layer through the above substrate, of information which can be read optically; the optical information recording media is characterized in that the above land pre-pits are continuous along the above pregroove and protrude in the radial direction of the above substrate in an arc shape, and that, if the inside protrusion length in the radial direction on the inside of the arc is $R_{in}$ and the outside protrusion length in the radial direction on the outside of the arc is $R_{out}$, then 0.120 μm $\leq R_{in} \leq$ 0.182 μm and 0.100 μm $\leq R_{out} \leq$ 0.250 μm.

The above $R_{in}$ and $R_{out}$ can be set such that 0.140 μm $\leq R_{in} \leq$ 0.173 μm and 0.100 μm $\leq R_{out} \leq$ 0.192 μm.

The above $R_{in}$ and $R_{out}$ can be set such that $R_{in} \leq R_{out}$.

The above $R_{in}$ and $R_{out}$ can be set such that 0.140 μm $\leq R_{in} \leq$ 0.156 μm and 0.156 μm $\leq R_{out} \leq$ 0.192 μm.

The above $R_{in}$ and $R_{out}$ can be set such that 0.120 μm $\leq R_{in} \leq$ 0.130 μm and 0.180 μm $\leq R_{out} \leq$ 0.244 μm.

When the wavelength of the above recording light is λ, the recording depth in the unrecorded state in the above pregroove can be set to λ/8 to λ/5.

The above optical recording layer can comprise light absorbing material capable of absorbing the above recording light.

In optical information recording media of this invention (the fourth invention), for the inside protrusion length in the radial direction on the inside of the arc $R_{in}$ and the outside protrusion length in the radial direction on the outside of the arc $R_{out}$, the values

$$0.120 \ \mu m \leq R_{in} \leq 0.182 \ \mu m$$

and

$$0.100 \ \mu m \leq R_{out} \leq 0.250 \ \mu m$$

are set, so that when a land pre-pit and a recorded pit are adjacent, and/or when there is partial overlap, not only is the outside protruding length $R_{out}$ of the land pre-pit stipulated, but the inside protruding length $R_{in}$ is also stipulated; hence the RF fluctuation during reproduction can be stabilized at approximately 1%, the AR of land pre-pits 8 can be maintained at 15% or higher, readout errors for RF signals and land pre-pits can be avoided, and necessary sector information can be reliably obtained even from DVD-R discs at high densities and high speeds.

## BRIEF DESCRIPTION OF THE DRAWINGS

Fig. 1 is an enlarged plane view showing in enlargement the optical information recording media 20 of a first aspect of this invention (first invention), and in particular a portion of a meandering land pre-pit 21 and a portion of a circular spot 9S of laser light 9 irradiating same;

Fig. 2 is a cross-sectional view of a portion of a land pre-pit 21 of same;

Fig. 3 is an enlarged plane view illustrating the state of irradiation with laser light 9 (circular spot 9S) of a land pre-pit 21 of same;

Fig. 4 is an enlarged plane view showing another example of a land pre-pit of same (land pre-pit 30);

Fig. 5 is an enlarged plane view showing still another example of a land pre-pit of same (land pre-pit 31);

Fig. 6 is an enlarged plane view showing in enlargement the optical information recording media 40 of a second aspect of this invention (second invention), and in particular a portion of a meandering land pre-pit 21 and a portion of a circular spot 9S of laser light 9 irradiating same;

Fig. 7 is an enlarged plane view for a case in which a recorded pit 10 overlaps with a portion of a conventional meandering land pre-pit 8;

Fig. 8 is an enlarged plane view for a case in which a recorded pit 10 overlaps with a portion of a meandering land pre-pit 21 of this invention (second invention);

Fig. 9 is an enlarged plane view showing in enlargement the optical information recording media 50 of a third aspect of this invention (third invention), and in particular a portion of a meandering land pre-pit 21 and a portion of a circular spot 9S of laser light 9 irradiating same;

Fig. 10 is an enlarged plane view of a portion of a meandering land pre-pit 8 in the optical information recording media of a fourth aspect of this invention (fourth invention);

Fig. 11 is a graph showing the relation of AR to $R_{out}$ and $R_{in}$ in same;

Fig. 12 is a graph showing the numerical range of RF signal fluctuations and the range over which AR is 15% or higher in same, with $R_{out}$ on the horizontal axis and $R_{in}$ on the vertical axis;

Fig. 13 is a graph showing the numerical range of RF signal fluctuations and the range over which AR is 18% or higher in same, with $R_{out}$ on the horizontal axis and $R_{in}$ on the vertical axis;

Fig. 14 is a graph showing the numerical range of RF signal fluctuations and the range over which AR is 18% or higher in same, with $R_{out}$ on the horizontal axis and $R_{in}$ on the vertical axis;

Fig. 15 is a partial enlarged plane view of conventional optical information recording media, and a graph of RF signals and land pre-pit signals thereof;

Fig. 16 is a cross-sectional view along line XVI-XVI in Fig. 15;

Fig. 17 is a cross-sectional view along line XVII-XVII in Fig. 15;

Fig. 18 is a cross-sectional view along line XVIII-XVIII in Fig. 15;

Fig. 19 is a plane view of a circular land pre-pit 8 in same;

Fig. 20 is a plane view of a meandering land pre-pit 8 in same;

Fig. 21 is a graph showing the relation between the RF signal fluctuation amount and RF readout errors, for circular land pre-pits 8 in same;

Fig. 22 is a graph showing the relation between the RF signal fluctuation amount and RF readout errors, for meandering land pre-pits 8 in same;

Fig. 23 is a graph of the RF signals (3T pit signals) and land pre-pit signals when the unrecorded optical depth is approximately $\lambda/5.8$ in same; and,

Fig. 24 is a graph of the RF signals (3T pit signals) and land pre-pit signals when the unrecorded optical depth is approximately $\lambda/6.2$ in same.

## BEST MODE FOR CARRYING OUT THE INVENTION

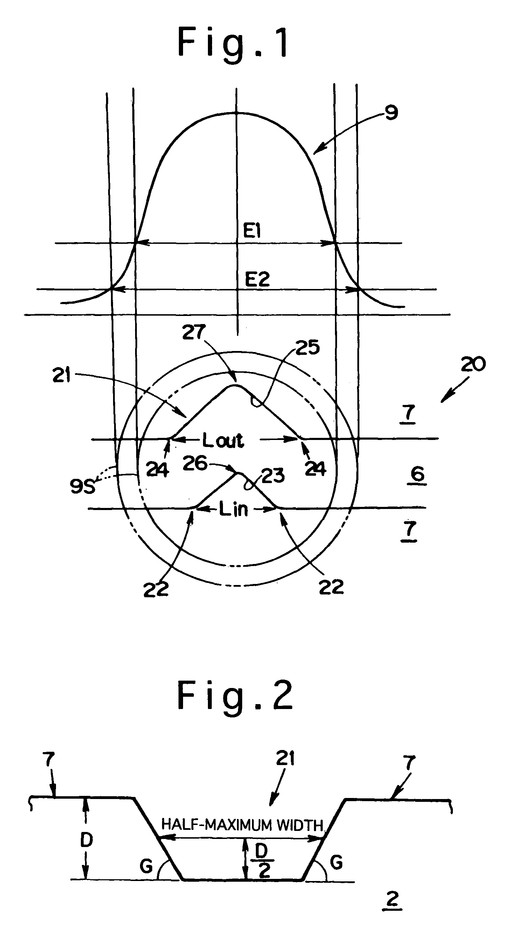

Next, the optical information recording media 20 of a first aspect of this invention (first invention) is explained based on Fig. 1 through Fig. 3. In the following explanation, portions similar to portions in Fig. 15 through Fig. 24 related to the prior art are assigned the same symbols, and detailed descriptions thereof are omitted.

Fig. 1 is an enlarged plane view showing in enlargement the optical information recording media 20 and in particular a portion of a meandering land pre-pit 21 and a portion of a circular spot 9S of laser light 9 irradiating same; the Gaussian energy distribution of the circular spot 9S of laser light 9 is also shown.

As shown in Fig. 1, a land pre-pit 21 is formed in a portion of the pregroove 6 in an arc shape, protruding outward in the radial direction of the optical information recording media 20.

A land pre-pit 21 is delineated by the inside protruding portion 23 which extends in substantially a triangular shape from the pair of inside edge portions 22 on the left and right in the figure, and by the outside protruding portion 25 which extends in substantially a triangular shape from the outside edge portions 24, and is formed so as to protrude in substantially a triangular shape on the side of the land 7 from the pregroove 6 on the outside circumference in the radial direction of the optical information recording media 20.

Substantially an isosceles triangle is formed between the most prominently protruding edge portion 26 on the inside of the inside protruding portion 23 and the pair of inside edge portions 22.

Substantially an isosceles triangle is formed between the most prominently protruding edge portion 27 on the outside of the outside protruding portion 25 and the pair of outside edge portions 24.

Of course, the inside protruding portion 23 and outside protruding portion 25 can be designed based on the shapes of arbitrary curves.

Other portions of the optical information recording media 20 are similar to those of the optical information recording media 1 shown in Fig. 15 through Fig. 18.

The distance between the two inside edge portions 22 of the inside triangular shape of the land pre-pit 21 is $L_{in}$.

The distance between the two outside edge portions 24 of the outside triangular shape of the land pre-pit 21 is $L_{out}$.

Fig. 2 is a vertical cross-sectional view of the land pre-pit 21, and as shown in the figure, the inside wall of the land pre-pit 21 in the substrate 2 has an inclination angle G of 40 to 80°, and the above distances $L_{in}$ and $L_{out}$ are defined as the width at one-half the depth D of the land pre-pit 21 (the half-maximum width).

If the wavelength of the laser light 9 is $\lambda$, then for design conditions in which the optical depth in the unrecorded state in the pregroove 6 is from $\lambda/8$ to $\lambda/5$ and the track pitch of the pregroove 6 is from 0.70 to 0.85 $\mu$m, the land pre-pits 21 of this invention are such that the inside edge portions 22 of the inside protruding portion 23 and the outside edge portions 24 of the outside protruding portion 25 of a land pre-pit 21 are positioned within the range of the spot diameter E2 which is the $1/e^2$ portion of the Gaussian energy distribution of the circular spot 9S of the laser light 9, where e is the base of natural logarithms (approximately 2.72).

In other words, the distances $L_{in}$ and $L_{out}$ of land pre-pits 21 are made smaller than the spot diameter E2 in the effective energy range, which is the $1/e^2$ portion of the Gaussian energy distribution of the circular spot 9S of laser light 9.

Further, it is preferable that, with respect to the land pre-pits 21, together with the inside edge portions 22 and outside edge portions 24, the most prominently protruding inside edge portion 26 of the inside protruding portion 23 and the most prominently protruding outside edge portion 27 of the outside protruding portion 25 be positioned within the spot diameter E2 of the $1/e^2$ portion of the Gaussian energy distribution of the circular spot 9S of laser light 9.

It is still more preferable that the inside edge portions 22 and outside edge portions 24 of land pre-pits 21, and also the most prominently protruding inside edge portion 26 and the most prominently protruding outside edge portion 27 be positioned within the range of the spot diameter E1 of the $1/e$ portion of the Gaussian energy distribution of the circular spot 9S of laser light 9.

Whereas conventional meandering land pre-pits are not positioned within the range of the circular spot 9S, but a portion extends outside, in the case of the land pre-pits 21 of this invention the inside edge portions 22 and outside edge portions 24 thereof are positioned so as to converge toward the center position of the circular spot 9S of laser light 9.

In optical information recording media 20 having land pre-pits 21 configured in this way, intensity differences due to diffraction of laser light at the land pre-pit portions 21 can be made clear and the accuracy of detection of land pre-pits 21 can be improved so that land pre-pit signals can be obtained; in addition, the effect on RF signals can be reduced, and fluctuations therein can be held below a prescribed level.

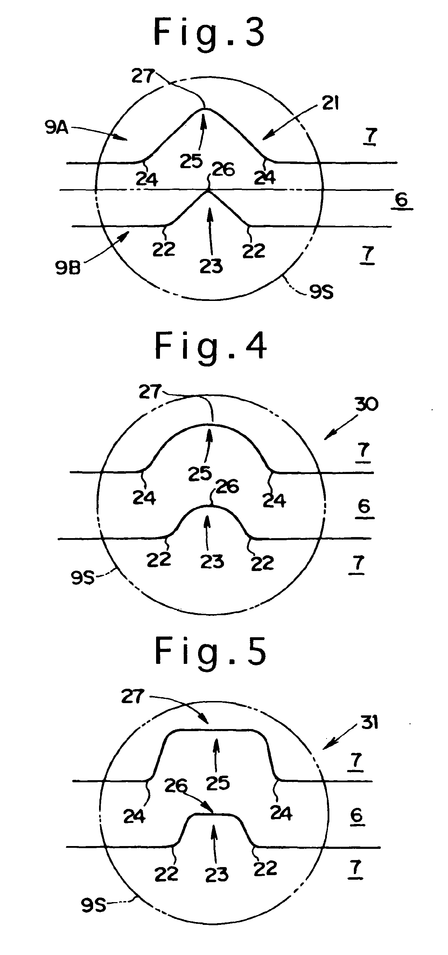

Fig. 3 is an enlarged plane view illustrating the state of irradiation with laser light 9 (circular spot 9S) of a land pre-pit 21. When directing the circular spot 9S of the laser light 9 onto a land pre-pit 21 to obtain a signal from the land pre-pit 21, diffraction of the laser light 9 by the land pre-pit 21 results in a clear difference above and below the range of the circular spot 9S (in the spot upper range 9A and spot lower range 9B), enhancing the detection accuracy, so that even if the land pre-pit 21 is in proximity to a recorded pit 10, the AR of the land pre-pit signal is maintained at 15% or higher and readout errors are avoided, while the RF signal fluctuation amount can be held to less than 1%.

Further, if a land pre-pit 21 is positioned within the circular spot 9S of the laser light 9, then adjustment is possible depending on the state of the deposited film in this portion without being greatly affected by differences in the unrecorded optical depth in the range from $\lambda/8$ to $\lambda/5$ and without greatly affecting the RF signal, so that optimization is possible.

In this invention, if land pre-pits 21 are positioned within the circular spot 9S of the laser light 9, the shape of the land pre-pits 21 can be chosen arbitrarily.

For example, Fig. 4 is an enlarged plane view showing another example of a land pre-pit (land pre-pit 30); this land pre-pit 30 protrudes in an arc shape in the outward radial direction of the optical information recording media 20, and the inside edge portions 22 and most prominently protruding inside edge portion 26 of the inside protruding portion 23, as well as the outside edge portions 24 and most prominently protruding outside edge portion 27 of the outside protruding portion 25, are positioned within the range of the circular spot 9S.

Fig. 5 is an enlarged plane view showing still another example of a land pre-pit (land pre-pit 31); this land pre-pit 31 protrudes in a trapezoidal shape in the outward radial direction of the optical information recording media 20, and the inside edge portions 22 and most prominently protruding inside edge portion 26 of the inside protruding portion 23, as well as the outside edge portions 24 and most prominently protruding outside edge portion 27 of the outside protruding portion 25, are positioned within the range of the circular spot 9S.

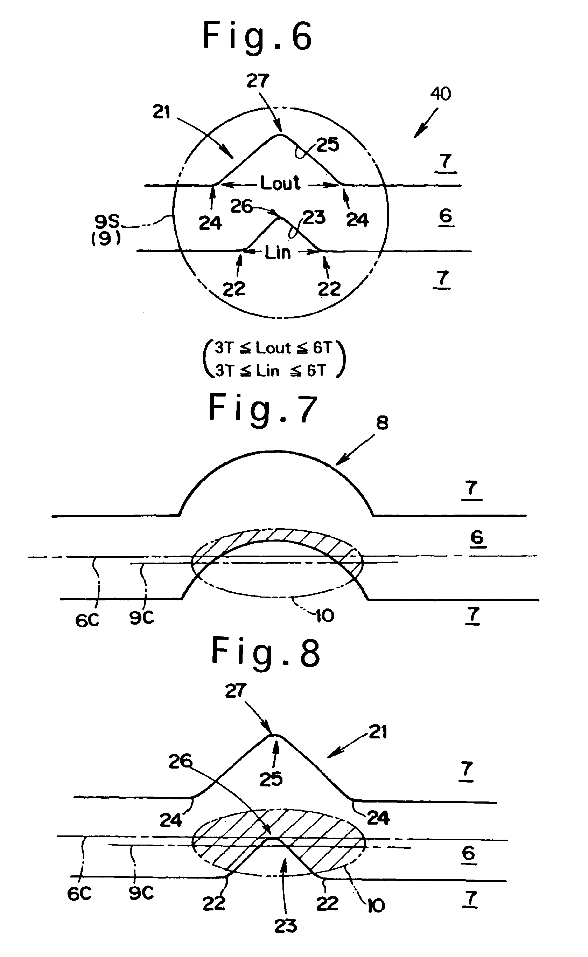

Next, the optical information recording media 40 of a second aspect of the invention (second invention) is explained, based on Fig. 6 through Fig. 8.

Fig. 6 is an enlarged plane view showing in enlargement the optical information recording media 40, and in particular a portion of a meandering land pre-pit 21 and a portion of a circular spot 9S of laser light 9 irradiating the media.

As shown in Fig. 6, in the optical information recording media 40, similarly to the optical information recording media 20 of the first invention (Fig. 1), land pre-pits 21 are formed in a portion of the pregroove 6 to protrude in an arc shape in the radial direction on the outer circumference side of the optical information recording media 40.

In this invention (the second invention), when the wavelength of the laser light 9 is $\lambda$, then for design conditions in which the optical depth in the unrecorded state in the pregroove 6 is from $\lambda/8$ to $\lambda/5$ and the track pitch of the pregroove 6 is from 0.70 to 0.85 $\mu$m, the land pre-pits 21 of this invention are such that the distances $L_{in}$ and $L_{out}$ range between the shortest pit length, 3T, to twice this length (6T).

Further, it is preferable that the distances $L_{in}$ and $L_{out}$ be in the range from 3.36T to 5.22T.

Also, it is preferable that the distance $L_{in}$ be in the range from 3T to 4T, and more preferably still, in the range from 3.36T to 3.73T.

Also, it is preferable that the distance $L_{out}$ be in the range from 4T to 6T, and more preferably still, in the range from 4.85T to 5.22T.

Even when, in optical information recording media 40 having such land pre-pits 21, a land pre-pit 21 overlaps with a recorded pit 10, by maintaining the shape and size of the recorded pit 10 at the necessary level the effect on the RF signal is reduced and the fluctuation amount can be held within a prescribed range; in addition, the accuracy of detection of land pre-pits 21 can be improved, and land pre-pit signals can be obtained.

Fig. 7 is an enlarged plane view for a case in which a recorded pit 10 overlaps with a portion of a conventional meandering land pre-pit 8, and Fig. 8 is an enlarged plane view for a case in which a recorded pit 10 overlaps with a portion of a meandering land pre-pit 8 of this invention, showing in particular the state in which the laser light 9 is slightly shifted to the disc radial-direction center side (detracking).

As is shown in Fig. 7 and Fig. 8, tracking of the laser light 9 ideally should involve movement of the center 9C along the center line 6C of the pregroove 6; but in actuality, as recording speeds are increased, the center 9C of the laser light 9 deviates from the center line 6C of the pregroove 6, and recorded pits 10 may be recorded.

As shown in Fig. 7, when land pre-pits 8 have an arc shape, as a result of encroachment of the land 7 into the center portion of a recorded pit 10, the normal, that is to say designed, shape and size of the recorded pit cannot be obtained, and a satisfactory RF signal cannot be obtained upon reproduction, so that there is a high probability of readout errors. This tendency is prominent in the case of recorded pits 10 which are shorter than 3T or similar.

On the other hand, as shown in Fig. 8, in the case of the land pre-pits 21 of this invention the distances $L_{in}$ and $L_{out}$ are within the range 3T to 6T. Hence in the example shown, the inside edge portions 22 of the inside protruding portion 23 in particular are positioned closer to each other than in the case of conventional arc-shape land pre-pits 8, so that the area of encroachment of the land 7 (inside protruding portion 23) on the portion of the recorded pit 10 is smaller than in the prior art, and the effect exerted on the shape and size of the recorded pit 10 can be reduced.

Moreover, readout errors occur less readily during reproduction even when detracking of the laser light 9 occurs.

If a land pre-pit 21 is positioned within the circular spot 9S of the laser light 9, then adjustment is possible depending on the state of the deposited film in this portion without being greatly affected by differences in the unrecorded optical depth in the range from $\lambda/8$ to $\lambda/5$ and without greatly affecting the RF signal, so that optimization is possible.

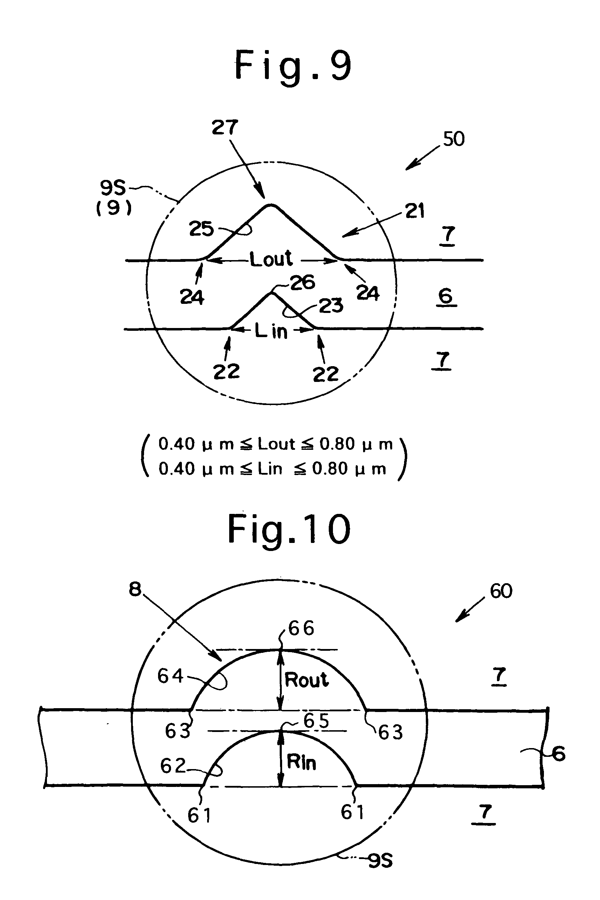

Next, the optical information recording media of a third aspect of this invention (third invention) is explained, based on Fig. 9.

Fig. 9 is an enlarged plane view showing in enlargement the optical information recording media 50, and in particular a portion of a meandering land pre-pit 21 and a portion of a circular spot 9S of laser light 9 irradiating this pre-pit.

As shown in Fig. 9, in the optical information recording media 50, similarly to the optical information recording media 20 of the first invention (Fig. 1) and the optical information recording media 40 of the second invention (Fig. 6), land pre-pits 21 are formed in a portion of the pregroove 6, protruding in an arc shape in the radial direction on the outer circumference side of the optical information recording media 50.

In this invention (the third invention), when the wavelength of the laser light 9 is λ, then for design conditions in which the optical depth in the unrecorded state in the pregroove 6 is from λ/8 to λ/5 and the track pitch of the pregroove 6 is from 0.70 to 0.85 μm, the land pre-pits 21 of this invention are such that 0.40 μm ≤ $L_{in}$ ≤ 0.80 μm, and 0.40 μm ≤ $L_{out}$ ≤ 0.80 μm.

It is preferable that 0.45 μm ≤ $L_{in}$ ≤ 0.50 μm and 0.65 μm ≤ $L_{out}$ ≤ 0.70 μm.

That is, the inside edge portions 22 of the inside protruding portion 23 and outside edge portions 24 of the outside protruding portion 25 of these land pre-pits 21 are positioned within the range of the circular spot 9S of the laser light 9.

In other words, by limiting the distances $L_{in}$ and $L_{out}$, the land pre-pits 21 are positioned within the circular spot 9S of the laser light 9.

Whereas conventional meandering land pre-pits are not positioned within the range of the circular spot 9S, but a portion extends outside, in the case of the land pre-pits 21 of this invention the inside edge portions 22 and outside edge portions 24 thereof are positioned so as to converge toward the center position of the circular spot 9S of laser light 9.

In optical information recording media 50 having land pre-pits 21 configured in this way, intensity differences due to diffraction of laser light at the land pre-pit portions 21 can be made clear and the accuracy of detection of land pre-pits 21 can be improved so that land pre-pit signals can be obtained; in addition, the effect on RF signals can be reduced, and fluctuations therein can be held below a prescribed level.

That is, when irradiating a land pre-pit 21 with laser light 9 (the circular spot 9S), directing the circular spot 9S of the laser light 9 onto the land pre-pit 21 to obtain a signal from the land pre-pit 21, the margin with respect to external disturbances is increased, and moreover the detection accuracy is improved, so that even if the land pre-pit 21 is in proximity to a recorded pit 10, the AR of the land pre-pit signal is maintained at 15% or higher and readout errors are avoided, while the RF signal fluctuation amount can be held to less than 1%.

Further, if a land pre-pit 21 is positioned within the circular spot 9S of the laser light 9, then adjustment is possible depending on the state of the deposited film in this portion without being greatly affected by differences in the unrecorded optical depth in the range from λ/8 to λ/5 and without greatly affecting the RF signal, so that optimization is possible.

Next, the optical information recording media 60 of a fourth aspect of this invention (fourth invention) is explained, based on Fig. 10 through Fig. 14.

Fig. 10 is an enlarged plane view of a portion of a meandering land pre-pit 8 in the optical information recording media 60. Land pre-pits 8 are formed in circular arc shapes or elliptical arc shapes, similarly to those of the prior art shown in Fig. 20, in portions of the pregroove 6 protruding in an arc shape on the outside circumference side in the radial direction of the optical information recording media 60.

That is, a land pre-pit 8 is delineated by the inside arc-shape portion 62 extending in an arc shape from the pair of inside arc edge portions 61 on the left and right in the figure and by the outside arc-shape portion 64 extending in an arc shape from the outside arc-shape edge portions 63, and is formed protruding in a circular arc shape on the outside circumference side in the radial direction of the optical information recording media 60.

The inside arc-shape portion 62 and outside arc-shape portion 64 are both based on an elliptical arc shape, and are formed in arc shapes by selecting the curve of a portion of an ellipse. Of course, similarly to the first through third inventions, the inside arc-shape portion 62 and outside arc-shape portion 64 can be designed based on a triangular shape, arc shape, trapezoidal shape, or other arbitrary shape or arbitrary curve.

As in the first through third inventions, the other portions of the optical information recording media 60 are similar to those of the optical information recording media 1 shown in Fig. 15 through Fig. 18.

The inside protrusion length in the radial direction on the arc inner side of a land pre-pit 8 (the distance from the additional line connecting the inside arc shape edge portions 61 on both sides to the additional line tangent to the inside arc-shape portion 62 at the most prominently protruding portion 65 of the circular arc of the inside arc-shape portion 62) is $R_{in}$.

The outside protrusion length in the radial direction on the arc outer side of a land pre-pit 8 (the distance from the additional line connecting the outside arc shape edge portions 63 on both sides to the additional line tangent to the outside arc-shape portion 64 at the most prominently protruding portion 66 of the circular arc of the outside arc-shape portion 64) is $R_{out}$.

However, similarly to the land pre-pit 21 shown in Fig. 2, the inner wall portion of a land pre-pit 8 in the substrate 2 has an inclination angle G of from 40 to 80°, and each of the above additional lines is drawn at the width at one-half the depth D of the land pre-pit 8 (the half-maximum width).

In this invention (the fourth invention), when the wavelength of the laser light 9 is λ, then for design conditions in which the optical depth in the unrecorded state in the pregroove 6 is from λ/8 to λ/5 and the track pitch of the pregroove 6 is from 0.70 to 0.85 μm, it is preferable that the land pre-pits 8 of this invention be such that 0.120 μm ≤ $R_{in}$ ≤ 0.182 μm, and 0.100 μm ≤ $R_{out}$ ≤ 0.250 μm. This is explained below.

As stated above, in order to simultaneously reduce the RF readout errors of recorded pits 10 and the readout errors of land pre-pits 8 when employing meandering land pre-pits 8, the RF signal fluctuation amount must be held to at least less than 1%, and in addition the characteristics of the land pre-pits 8, that is, the AR (amplitude decrease rate index), must be maintained at 15% or higher.

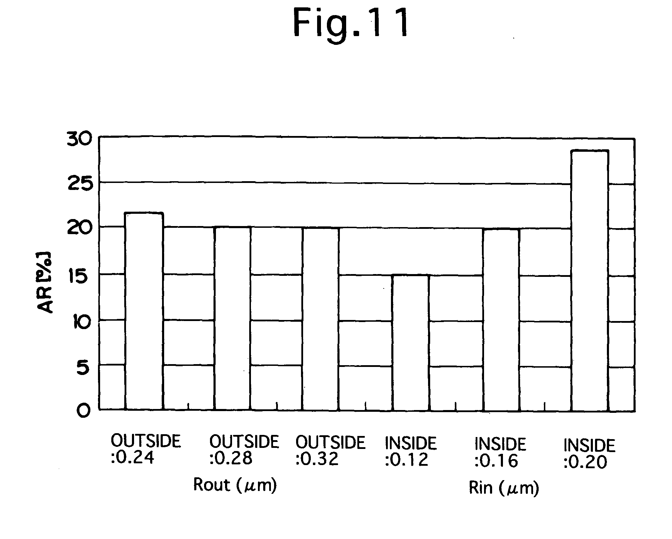

Fig. 11 is a graph showing the relation of AR to $R_{out}$ and $R_{in}$; as indicated in the figure, $R_{out}$ does not greatly affect AR, and the influence of $R_{in}$ dominates.

As shown in Fig. 11, when the figure of AR=15% is taken as a target, the value $R_{in}$=0.120 µm lies on the borderline of optimal design conditions for land pre-pits 8.

This invention (the fourth invention) was devised by discovering regularity between the design values for $R_{in}$ and $R_{out}$ (the meandering shape design values), the amount of RF signal fluctuation, the AR (amplitude decrease rate index), and other measured electrical signal values, and drawing graphs with $R_{in}$ and $R_{out}$ plotted on the vertical and horizontal axes.

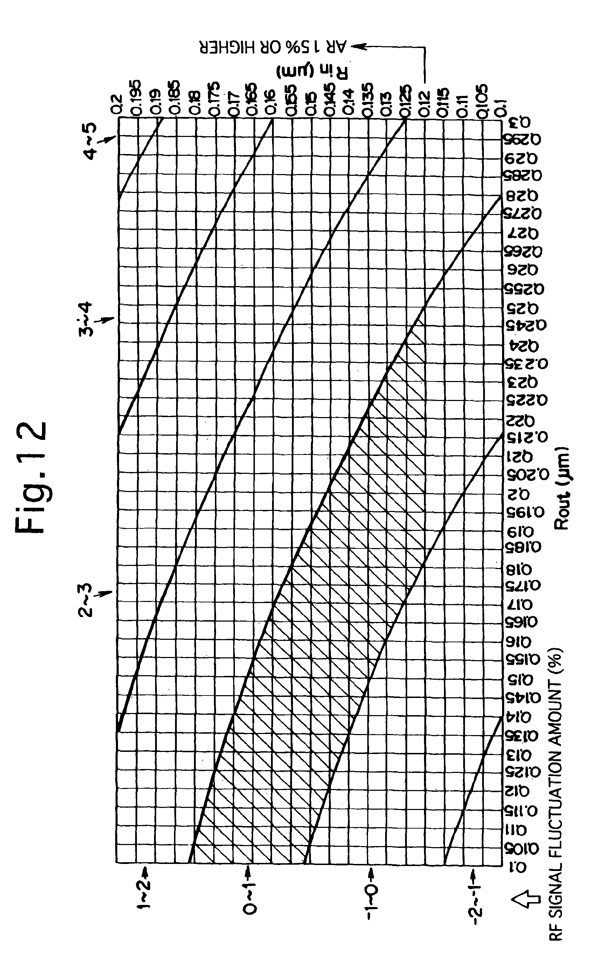

Fig. 12 is a graph showing the range of RF signal fluctuation amounts and the range over which the AR is 15% or higher, plotting $R_{out}$ on the horizontal axis and $R_{in}$ on the vertical axis. Here, the range over which AR is 15% or higher is indicated by an arrow on the $R_{in}$ axis, and RF signal fluctuation amounts are indicated in percentages (%) for regions delineated by arc-shape boundary lines.

As indicated by the oblique lines in Fig. 12, the range over which the AR is 15% or higher and the absolute value of RF signal fluctuations is 1% or less is $0.120\ \mu m \leq R_{in} \leq 0.182\ \mu m$ and $0.100\ \mu m \leq R_{out} \leq 0.250\ \mu m$.

As is clear from Fig. 11 and Fig. 12, the design value $R_{in}$=0.120 µm, when targeting the value AR=15%, is on the borderline of optimal design conditions for land pre-pits 8, and there are concerns that the AR may fall below 15% due to external disturbances arising from the specifications of the land pre-pits 8 or due to high recording speeds.

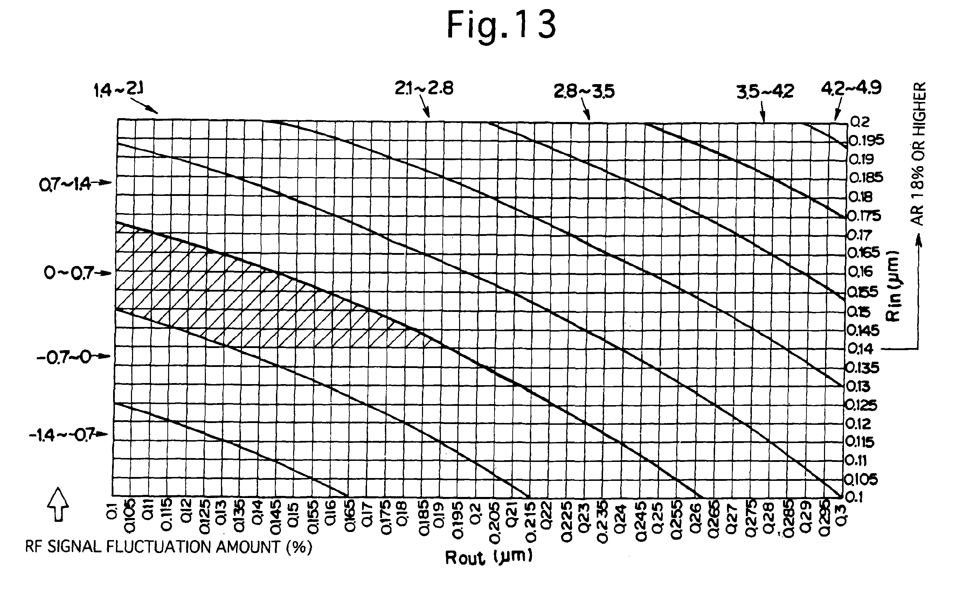

Fig. 13 shows a case in which the design margins are expanded to stipulate that the AR be 18% or higher and that RF signal fluctuation amounts be less than 0.7%.

Similarly to Fig. 12, Fig. 13 is a graph showing the range of RF signal fluctuation amounts and the range over which the AR is 18% or higher, plotting $R_{out}$ on the horizontal axis and $R_{in}$ on the vertical axis.

As indicated by the oblique lines in Fig. 13, the range over which the AR is 18% or higher and the absolute value of RF signal fluctuations is less than 0.7% is $0.140\ \mu m \leq R_{in} \leq 0.173\ \mu m$ and $0.100\ \mu m \leq R_{out} \leq 0.192\ \mu m$.

Of the design range for $R_{in}$ and $R_{out}$ shown in Fig. 13, the range in which the inside protruding length $R_{in}$ is greater than the outside protruding length $R_{out}$ ($R_{out} < R_{in}$) is difficult to realize, considering the fabrication and moldability of the optical information recording media 60 and the stamper therefor; realistically, it is preferable that $R_{in}$ be at maximum approximately 0.156 µm, and that $R_{in} \leq R_{out}$.

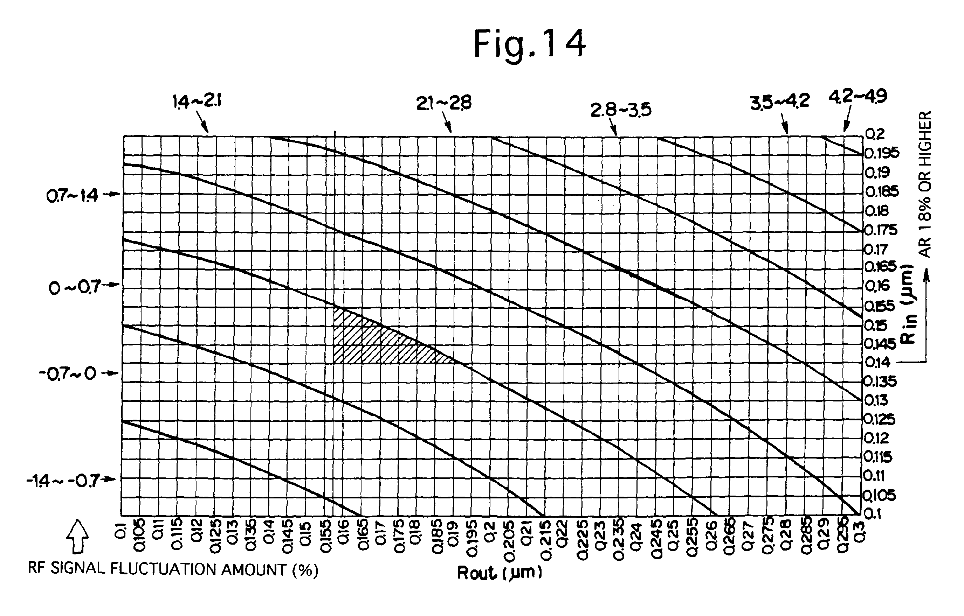

That is, similarly to Fig. 13, Fig. 14 is a graph showing the range of RF signal fluctuation amounts and the range over which the AR is 18% or higher, plotting $R_{out}$ on the horizontal axis and $R_{in}$ on the vertical axis.

As indicated by the oblique lines in Fig. 14, the range over which the AR is 18% or higher, the absolute value of RF signal fluctuations is less than 0.7%, and in addition $R_{in}$ is at maximum approximately 0.156 µm and $R_{in} \leq R_{out}$, is $0.140\ \mu m \leq R_{in} \leq 0.156\ \mu m$ and $0.156\ \mu m \leq R_{out} \leq 0.192\ \mu m$.

When the circular spot 9S of the laser light 9 deviates from the center direction of the optical information recording media 60 (disc) due to some external disturbance and is shifted from recorded pits 10 and land pre-pits 8 (detracking), the RF signal and land pre-pit signal are expected to fluctuate according to the extent of this deviation; in order to reduce insofar as possible the influence of this detracking, it is preferable that $0.120\ \mu m \leq R_{in} \leq 0.130\ \mu m$ and $0.180\ \mu m \leq R_{out} \leq 0.244\ \mu m$.

Thus in consideration of the ease of manufacturing, including the fabrication or molding of the optical information recording media 60 or stamper therefor, even under conditions in which margins are reduced due to external disturbances during high-speed recording, an optimized design is possible which adequately satisfies characteristics required for the land pre-pit 8 AR (amplitude decrease rate index) and fluctuations of the RF signals from recorded pits 10.

Thus according to this invention (the first invention), the inside edge portions and outside edge portions of land pre-pits are positioned within the circular spot of the laser light, which is either recording light or reproduction light, so that laser light diffraction can be made clear and the accuracy of land pre-pit detection can be improved, readout errors can be avoided through reduction in errors for both land pre-pit signals and for RF signals, and the specific shape of land pre-pits can be designed to accommodate high optical information densities and high speeds.

Also, according to this invention (the second invention), the distance $L_{in}$ between the pair of inside edge portions and the distance $L_{out}$ between the pair of outside edge portions of a land pre-pit are limited to the range 3T to 6T, so that the effect on recorded pits of even slight deviations in the laser light during recording or reproduction is reduced, errors can be reduced and readout errors avoided for both land pre-pit signals and for RF signals, and the specific shape of land pre-pits can be designed to accommodate high optical information densities and high speeds.

Also, according to this invention (the third invention), by setting the conditions for the distances $L_{in}$ and $L_{out}$ of $0.40\ \mu m \leq L_{in} \leq 0.80\ \mu m$ and $0.40\ \mu m \leq L_{out} \leq 0.80\ \mu m$, the laser light diffraction can be made clear and the accuracy of detection of land pre-pits can be improved, errors can be reduced and readout errors avoided for both land pre-pit signals and for RF signals, and the specific shape of land pre-pits can be designed to accommodate high optical information densities and high speeds.

Also, according to this invention (the fourth invention), by designing meandering land pre-pits so as to satisfy the conditions regarding the inside protruding length $R_{in}$ and outside protruding length $R_{out}$ of 0.120 µm ≤ $R_{in}$ ≤ 0.182 µm and 0.100 µm ≤ $R_{out}$ ≤ 0.250 µm, RF signal fluctuation amounts can be held to less than 1% and the land pre-pit signal AR can be maintained at 15% or higher, readout errors can be avoided, and the specific shape of land pre-pits can be designed to accommodate high optical information densities and high speeds.

**Claims**

1. Optical information recording media, having:

   a translucent substrate on which are formed a pregroove and land pre-pits in the land portions positioned on the left and right of the pregroove;

   an optical recording layer, provided on the substrate, enabling recording by recording light; and

   a light reflecting layer, provided on the optical recording layer, which reflects said recording light,

   and enabling recording, by irradiation of said optical recording layer with said recording light through said substrate, of information which can be read optically, the optical information recording media being **characterized in that**,

   said land pre-pits are continuous along said pregroove and are made to protrude in the radial direction of said substrate, and

   when e is the base of natural logarithms, then the inside edge portions of the inside protruding portion and the outside edge portions of the outside protruding portion of said land pre-pits are positioned within the range of the spot diameter in the $1/e^2$ portion of the Gaussian energy distribution of the spot due to said recording light.

2. The optical information recording media according to Claim 1, **characterized in that** said inside edge portions and said outside edge portions of said land pre-pits are positioned so as to converge toward the center position of said spot due to said recording light.

3. The optical information recording media according to Claim 1, **characterized in that**, when for said land pre-pits $L_{in}$ is the distance between said two inside edge portions of said inside protruding portion and $L_{out}$ is the distance between said two outside edge portions of said outside protruding portion, these distances $L_{in}$ and $L_{out}$ are made smaller than said spot diameter in the $1/e^2$ portion of said Gaussian energy distribution of said spot due to said recording light.

4. The optical information recording media according to Claim 1, **characterized in that**, for said land pre-pits, in addition to said inside edge portions and said outside edge portions, the most prominently protruding inside edge portion of said inside protruding portion and the most prominently protruding outside edge portion of said outside protruding portion are positioned within the range of said spot diameter in the $1/e^2$ portion of said Gaussian energy distribution of said spot due to said recording light.

5. The optical information recording media according to Claim 1, **characterized in that** said inside edge portions and said outside edge portions of said land pre-pits are positioned within the range of the spot diameter in the $1/e$ portion of said Gaussian energy distribution of said spot due to said recording light.

6. Optical information recording media, having:

   a translucent substrate on which are formed a pregroove and land pre-pits in the land portions positioned on the left and right of the pregroove;

   an optical recording layer, provided on the substrate, enabling recording of recorded pits by recording light; and,

   a light reflecting layer, provided on the optical recording layer, which reflects said recording light,

   and enabling recording, by irradiation of said optical recording layer with said recording light through said substrate, of information which can be read optically, the optical information recording media being **characterized in that**,

   said land pre-pits are continuous along said pregroove and are made to protrude in the radial direction of said substrate, and

   when $L_{in}$ is the distance between two inside edge portions of the inside protruding portion of said land pre-pits, $L_{out}$ is the distance between two outside edge portions of the outside protruding portion of said land pre-pits, and T is the basic length representing the length of said recorded pits, these distances $L_{in}$ and $L_{out}$ are within the range 3T to 6T.

7. The optical information recording media according to Claim 6, **characterized in that** said distances $L_{in}$ and $L_{out}$ are in the range 3.36T to 5.22T.

8. The optical information recording media according to Claim 6, **characterized in that** said distance $L_{in}$ is in the range 3T to 4T.

9. The optical information recording media according to Claim 6, **characterized in that** said distance $L_{in}$ is in the range 3.36T to 3.73T.

10. The optical information recording media according to Claim 6, **characterized in that** said distance $L_{out}$ is in the range 4T to 6T.

11. The optical information recording media according to Claim 6, **characterized in that** said distance $L_{out}$ is in the range 4.85T to 5.22T.

12. Optical information recording media, having:

a translucent substrate on which are formed a pregroove and land pre-pits in the land portions positioned on the left and right of the pregroove;

an optical recording layer, provided on the substrate, enabling recording by recording light; and

a light reflecting layer, provided on the optical recording layer, which reflects said recording light,

and enabling recording, by irradiation of said optical recording layer with said recording light through said substrate, of information which can be read optically, the optical information recording media being **characterized in that**,

when $L_{in}$ is the distance between two inside edge portions of said land pre-pits, and $L_{out}$ is the distance between two outside edge portions of said land pre-pits, the distances $L_{in}$ and $L_{out}$ are such that 0.40 $\mu$m $\leq L_{in} \leq$ 0.80 $\mu$m and 0.40 $\mu$m $\leq L_{out} \leq$ 0.80 $\mu$m.

13. The optical information recording media according to Claim 12, **characterized in that** said distances $L_{in}$ and $L_{out}$ are such that 0.45 $\mu$m $\leq L_{in} \leq$ 0.50 $\mu$m and 0.65 $\mu$m $\leq L_{out} \leq$ 0.70 $\mu$m.

14. The optical information recording media according to Claim 12, **characterized in that** said land pre-pits are formed in a meandering shape.

15. Optical information recording media, having:

a translucent substrate on which are formed a pregroove and land pre-pits in the land portions positioned on the left and right of the pregroove;

an optical recording layer, provided on the substrate, enabling recording by recording light; and

a light reflecting layer, provided on the optical recording layer, which reflects said recording light,

and enabling recording, by irradiation of said optical recording layer with said recording light through said substrate, of information which can be read optically, the optical information recording media being **characterized in that**,

said land pre-pits are continuous along said pregroove and are made to protrude in an arc shape in the radial direction of said substrate, and

when $R_{in}$ is the inside protruding length in the radial direction on the inside of the arc shape and $R_{out}$ is the outside protruding length in the radial direction on the outside of the arc shape, the lengths $R_{in}$ and $R_{out}$ are such that 0.120 $\mu$m $\leq R_{in} \leq$ 0.182 $\mu$m and 0.100 $\mu$m $\leq R_{out} \leq$ 0.250 $\mu$m.

16. The optical information recording media according to Claim 15, **characterized in that** said lengths $R_{in}$ and $R_{out}$ are such that 0.140 $\mu$m $\leq R_{in} \leq$ 0.173 $\mu$m and 0.100 $\mu$m $\leq R_{out} \leq$ 0.192 $\mu$m.

17. The optical information recording media according to Claim 15 or Claim 16, **characterized in that** said lengths $R_{in}$ and $R_{out}$ are such that $R_{in} \leq R_{out}$.

18. The optical information recording media according to Claim 15, **characterized in that** said lengths $R_{in}$ and $R_{out}$ are such that 0.140 $\mu$m $\leq R_{in} \leq$ 0.156 $\mu$m and 0.156 $\mu$m $\leq R_{out} \leq$ 0.192 $\mu$m.

19. The optical information recording media according to Claim 15, **characterized in that** said lengths $R_{in}$ and $R_{out}$ are such that 0.120 $\mu$m $\leq R_{in} \leq$ 0.130 $\mu$m and 0.180 $\mu$m $\leq R_{out} \leq$ 0.244 $\mu$m.

20. The optical information recording media according to Claim 15, **characterized in that**, when $\lambda$ is the wavelength of said recording light, the optical depth in the unrecorded state in said pregroove is from $\lambda$/8 to $\lambda$/5.

21. The optical information recording media according to Claim 15, **characterized in that** said optical recording layer comprises light absorbing material capable of absorbing said recording light.

# Fig.1

# Fig.2

# Fig. 3

# Fig. 4

# Fig. 5

16

# Fig.6

$$\begin{pmatrix} 3T \leqq Lout \leqq 6T \\ 3T \leqq Lin \;\; \leqq 6T \end{pmatrix}$$

# Fig.7

# Fig.8

# Fig. 9

$$\begin{pmatrix} 0.40\ \mu m \leqq Lout \leqq 0.80\ \mu m \\ 0.40\ \mu m \leqq Lin\ \leqq 0.80\ \mu m \end{pmatrix}$$

# Fig. 10

# Fig.11

# Fig.12

EP 1 533 797 A1

RF SIGNAL FLUCTUATION AMOUNT (%)

Rout (μm)

Rin (μm)

AR 15% OR HIGHER

Fig.13

EP 1 533 797 A1

Fig.14

## Fig.15
### PRIOR ART

LAND PRE-PIT SIGNAL

FLUCTUATION AMOUNT

RF SIGNAL

FLUCTUATION AMOUNT

# Fig.16
PRIOR ART

# Fig.17
PRIOR ART

# Fig.18
PRIOR ART

# Fig.19
## PRIOR ART

# Fig.20
## PRIOR ART

# Fig.21
## PRIOR ART

# Fig.22
## PRIOR ART

EP 1 533 797 A1

# Fig.23
## PRIOR ART

LAND PRE-PIT SIGNAL

RF SIGNAL

FLUCTUATION AMOUNT

3T PIT

# Fig.24
## PRIOR ART

LAND PRE-PIT SIGNAL

RF SIGNAL

FLUCTUATION AMOUNT

3T PIT

26

EXPLANATION OF SYMBOLS

1      OPTICAL INFORMATION RECORDING MEDIA (FIG. 15 THROUGH FIG. 18)

2      TRANSLUCENT SUBSTRATE

3      LIGHT ABSORBING LAYER (OPTICAL RECORDING LAYER)

4      LIGHT REFLECTING LAYER

5      PROTECTIVE LAYER

6      PREGROOVE

6W     WOBBLE (UNDULATION) OF PREGROOVE 6

7      LAND

8      LAND PRE-PIT

9      LASER LIGHT (RECORDING LIGHT, REPRODUCTION LIGHT)

9S     CIRCULAR SPOT OF LASER LIGHT 9 (SPOT)

9A     SPOT UPPER RANGE OF LASER LIGHT 9 (FIG. 3)

9B     SPOT LOWER RANGE OF LASER LIGHT 9 (FIG. 3)

10     RECORDED PIT (FIG. 7, FIG. 8, FIG. 15, FIG. 18)

11     FIRST INTERFACE BETWEEN SUBSTRATE 2 AND LIGHT ABSORBING LAYER 3

12     SECOND INTERFACE BETWEEN LIGHT ABSORBING LAYER 3 AND LIGHT REFLECTING LAYER 4

13     THIRD INTERFACE BETWEEN LIGHT REFLECTING LAYER 4 AND PROTECTIVE LAYER 5

20     OPTICAL INFORMATION RECORDING MEDIA (FIRST INVENTION, FIRST ASPECT, FIG. 1)

21    MEANDERING LAND PRE-PIT

22    INSIDE EDGE PORTION OF INSIDE PROTRUDING PORTION 23

23    INSIDE PROTRUDING PORTION

24    OUTSIDE EDGE PORTION OF OUTSIDE PROTRUDING PORTION 25

25    OUTSIDE PROTRUDING PORTION

26    MOST PROMINENTLY PROTRUDING INSIDE EDGE PORTION OF INSIDE PROTRUDING PORTION 23

27    MOST PROMINENTLY PROTRUDING OUTSIDE EDGE PORTION OF OUTSIDE PROTRUDING PORTION 25

30    LAND PRE-PIT (FIG. 4)

31    LAND PRE-PIT (FIG. 5)

40    OPTICAL INFORMATION RECORDING MEDIA (SECOND INVENTION, SECOND ASPECT, FIG. 6)

50    OPTICAL INFORMATION RECORDING MEDIA (THIRD INVENTION, THIRD ASPECT, FIG. 9)

60    OPTICAL INFORMATION RECORDING MEDIA (FOURTH INVENTION, FOURTH ASPECT, FIG. 10)

61    INSIDE ARC EDGE PORTION OF LAND PRE-PIT 8

62    INSIDE ARC-SHAPE PORTION OF LAND PRE-PIT 8

63    OUTSIDE ARC EDGE PORTION OF LAND PRE-PIT 8

64    OUTSIDE ARC-SHAPE PORTION OF LAND PRE-PIT 8

65    MOST PROMINENTLY PROTRUDING PORTION OF ARC OF INSIDE ARC-SHAPE PORTION 62

66    MOST PROMINENTLY PROTRUDING PORTION OF ARC OF OUTSIDE

ARC-SHAPE PORTION 64

$L_{in}$    DISTANCE BETWEEN TWO INSIDE EDGE PORTIONS 22 OF LAND PRE-PIT 21 (FIG. 1, FIG. 6, FIG. 9)

$L_{out}$    DISTANCE BETWEEN TWO OUTSIDE EDGE PORTIONS 24 OF LAND PRE-PIT 21 (FIG. 1, FIG. 6, FIG. 9)

$R_{in}$    INSIDE PROTRUDING LENGTH IN RADIAL DIRECTION ON INSIDE OF ARC SHAPE OF LAND PRE-PIT 8 (FIG. 10)

$R_{out}$    OUTSIDE PROTRUDING LENGTH IN RADIAL DIRECTION ON OUTSIDE OF ARC SHAPE OF LAND PRE-PIT 8 (FIG. 10)

G    ANGLE OF INCLINATION OF INSIDE WALL PORTION OF LAND PRE-PIT 21 (40 TO 80°, FIG. 2)

D    DEPTH OF LAND PRE-PIT 21 (FIG. 2)

E2    SPOT DIAMETER IN $1/e^2$ PORTION OF GAUSSIAN ENERGY DISTRIBUTION OF CIRCULAR SPOT 9S OF LASER LIGHT 9 (FIG. 1)

E1    SPOT DIAMETER IN $1/e$ PORTION OF GAUSSIAN ENERGY DISTRIBUTION OF CIRCULAR SPOT 9S OF LASER LIGHT 9 (FIG. 1)

## INTERNATIONAL SEARCH REPORT

| | International application No. |
|---|---|
| | PCT/JP03/10336 |

A. CLASSIFICATION OF SUBJECT MATTER
   Int.Cl⁷ G11B7/007, 7/24

According to International Patent Classification (IPC) or to both national classification and IPC

B. FIELDS SEARCHED

Minimum documentation searched (classification system followed by classification symbols)
   Int.Cl⁷ G11B7/00-7/013, 7/24, 7/30

Documentation searched other than minimum documentation to the extent that such documents are included in the fields searched
   Jitsuyo Shinan Koho        1922-1996    Toroku Jitsuyo Shinan Koho    1994-2003
   Kokai Jitsuyo Shinan Koho   1971-2003    Jitsuyo Shinan Toroku Koho    1996-2003

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 9-102143 A  (NEC Corp.),<br>15 April, 1997 (15.04.97),<br>Par. Nos. [0036], [0037]; Fig. 2<br>(Family: none) | 1-5<br>6-21 |
| Y | JP 10-027349 A  (Sharp Corp.),<br>27 January, 1998 (27.01.98),<br>Par. Nos. [0057], [0058]<br>& EP 0818778 A2          & US 6295271 B1 | 6-21 |
| X | JP 2001-118274 A  (Sony Corp.),<br>27 April, 2001 (27.04.01),<br>Full text<br>(Family: none) | 1-5 |

☒ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16 December, 2003 (16.12.03) | 13 January, 2004 (13.01.04) |

| Name and mailing address of the ISA/ | Authorized officer |
|---|---|
| Japanese Patent Office | |
| Facsimile No. | Telephone No. |

Form PCT/ISA/210 (second sheet) (July 1998)

**INTERNATIONAL SEARCH REPORT**

International application No.

PCT/JP03/10336

C (Continuation). DOCUMENTS CONSIDERED TO BE RELEVANT

| Category* | Citation of document, with indication, where appropriate, of the relevant passages | Relevant to claim No. |
|---|---|---|
| X | JP 9-120585 A (Hitachi, Ltd.), 06 May, 1997 (06.05.97), Full text (Family: none) | 1-5 |

Form PCT/ISA/210 (continuation of second sheet) (July 1998)

## INTERNATIONAL SEARCH REPORT

| International application No. |
| --- |
| PCT/JP03/10336 |

**Box I   Observations where certain claims were found unsearchable (Continuation of item 2 of first sheet)**

This international search report has not been established in respect of certain claims under Article 17(2)(a) for the following reasons:

1. ☐ Claims Nos.:
    because they relate to subject matter not required to be searched by this Authority, namely:

2. ☐ Claims Nos.:
    because they relate to parts of the international application that do not comply with the prescribed requirements to such an extent that no meaningful international search can be carried out, specifically:

3. ☐ Claims Nos.:
    because they are dependent claims and are not drafted in accordance with the second and third sentences of Rule 6.4(a).

**Box II   Observations where unity of invention is lacking (Continuation of item 3 of first sheet)**

This International Searching Authority found multiple inventions in this international application, as follows:
    (See extra sheet.)

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐    The additional search fees were accompanied by the applicant's protest.

                ☐    No protest accompanied the payment of additional search fees.

Form PCT/ISA/210 (continuation of first sheet (1)) (July 1998)

**INTERNATIONAL SEARCH REPORT**

| International application No. |
|---|
| PCT/JP03/10336 |

Continuation of Box No. II of continuation of first sheet(1)

Claims 1-5 are directed to an optical information recording medium characterized in that the inner end of an inner projection and the outer end of an outer projection of each land prepit are located within the range of the diameter of a light spot.

Claims 6-11 are directed to an optical information recording medium characterized in that the distance Lin between two inner ends of the inner projection of each land prepit and the distance Lout between two outer ends of the outer projection of the land prepit lie in the range between 3T and 6T.

Claims 12-14 are directed to an optical information recording medium characterized in that the Lin and Lout are limited by 0.40 μm ≤ Lin, Lout ≤ 0.80 μm.

Claims 15-21 are directed to an optical information recording medium characterized in that the length Rin of the inner projection in the radial direction inside an arc and the length Rout of the outer projection in the radial direction outside the arc are limited by 0.140 μm ≤ Rin ≤0.156 μm, 0.156 μm ≤ Rout ≤ 0.192 μm.

Therefore, these four groups of inventions are not so linked as to form a single general inventive concept.

Form PCT/ISA/210 (extra sheet) (July 1998)